(19) Europäisches Patentamt
European Patent Office
Office européen des brevets

(11) **EP 3 758 445 B1**

(12) **EUROPEAN PATENT SPECIFICATION**

(45) Date of publication and mention
of the grant of the patent:
**06.09.2023 Bulletin 2023/36**

(21) Application number: **19757559.0**

(22) Date of filing: **08.01.2019**

(51) International Patent Classification (IPC):
*H05B 6/14* (2006.01)      *D02J 13/00* (2006.01)
*F16C 13/00* (2006.01)

(52) Cooperative Patent Classification (CPC):
**H05B 6/145; D02J 13/00; F16C 13/00**

(86) International application number:
**PCT/JP2019/000184**

(87) International publication number:
**WO 2019/163311 (29.08.2019 Gazette 2019/35)**

(54) **HEATING ROLLER AND SPUN YARN DRAWING DEVICE**

HEIZWALZE UND SPINNFADENZIEHVORRICHTUNG

ROULEAU CHAUFFANT ET DISPOSITIF D'ÉTIRAGE DE FILÉS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.02.2018 JP 2018030434**

(43) Date of publication of application:
**30.12.2020 Bulletin 2020/53**

(73) Proprietor: **TMT Machinery, Inc.
Osaka-shi, Osaka 541-0041 (JP)**

(72) Inventors:
• **KAGATA, Kakeru
Kyoto-shi, Kyoto 612-8686 (JP)**

• **MORINAGA, Ryo
Kyoto-shi, Kyoto 612-8686 (JP)**

(74) Representative: **Hoffmann Eitle
Patent- und Rechtsanwälte PartmbB
Arabellastraße 30
81925 München (DE)**

(56) References cited:
WO-A1-2017/062251      DE-A1- 19 613 433
JP-A- H09 127 810      JP-A- H11 302 545
JP-A- S54 157 354      JP-A- 2000 290 081
JP-A- 2001 126 856      JP-A- 2013 080 916
US-A1- 2012 308 278

**Description**

[Technical Field]

The present invention relates to a heating roller and a spun yarn drawing device including the heating roller.

[Background Art]

As a heating roller in which an outer cylindrical part of the roller is heated, a heating roller which is configured to heat yarns wound onto its outer circumferential surface has been known, for example. When the temperature of the roller surface of such a heating roller is inconsistent in the axial direction, the degree of heating is different between the yarns, and this may cause the quality of the yarns to be irregular. In this regard, a heating roller of JP 2003-100437 A is arranged such that a jacket chamber in which a gas-liquid two-phase heating medium is enclosed extends in the axial direction at the outer cylindrical part of the roller main body. Because this jacket chamber functions as a heat pipe, the temperature of the roller surface can be equalized in the axial direction.
DE 196 13 433 A1 is related to the preamble of claim 1. [Summary of Invention]

[Technical Problem]

In the arrangement in which the heat pipe (jacket chamber) is provided at the outer cylindrical part of the roller main body as in JP 2003-100437 A, the outer cylindrical part must be arranged to be thick. As a result, the heat capacity of the outer cylindrical part is large and hence a large amount of energy is disadvantageously required to heat the roller surface. In view of the above, the present inventors conceived an idea of providing a cylindrical heat equalizing member having a heat conductivity higher than that of the roller main body to be in contact with an inner circumferential surface of the outer cylindrical part of the roller main body. With this arrangement, it is possible to decrease the thickness of the outer cylindrical part because the heat equalizing member functions as the heat pipe and no heat pipe is provided in the outer cylindrical part. However, when the heat equalizing member having a high thermal conductivity is simply made contact with the inner circumferential surface of the outer cylindrical part, it is disadvantageous in that the roller surface is less efficiently heated than expected, even if the outer cylindrical part is thin.
In consideration of the problem above, an object of the present invention is to efficiently heat a roller surface of a heating roller which is provided with a heat equalizing member.

[Solution to Problem]

According to a first aspect of the present invention, a heating roller in which a heating target portion of a roller main body is heated includes a heat equalizing member which is cylindrical in shape and is in contact with an inner circumferential surface of the heating target portion, thermal conductivity in an axial direction of the heat equalizing member being higher than thermal conductivity of at least the inner circumferential surface of the heating target portion, in the heat equalizing member, thermal conductivity in a radial direction being lower than thermal conductivity in the axial direction.
As a result of diligent study, the inventors of the subject application have found that the temperature of the roller surface cannot be efficiently heated when the heat equalizing member is provided, because a large amount of heat moves radially inward in the heat equalizing member from the heating target portion of the roller main body, and the heat is dissipated from the inner circumferential surface of the heat equalizing member. For this reason, according to the first aspect of the present invention, the thermal conductivity in the radial direction is arranged to be lower than the thermal conductivity in the axial direction in the heat equalizing member. With this arrangement, heat dissipation radially inward from the heating target portion of the roller main body is suppressed, and hence temperature decrease of the roller surface is suppressed. This makes it possible to efficiently heat the roller surface.
In the present invention, preferably, in the heat equalizing member, thermal conductivity in a circumferential direction is higher than the thermal conductivity in the radial direction.
When the heat conduction of the heat equalizing member is anisotropic, if the thermal conductivity in the circumferential direction is low in the same manner as in the thermal conductivity in the radial direction, the temperature distribution in the circumferential direction of the roller surface tends to be irregular. Therefore, as described above, because the thermal conductivity in the circumferential direction is higher than the thermal conductivity in the radial direction in this way, the temperature distribution is effectively equalized not only in the axial direction but also in the circumferential direction.
In the present invention, preferably, the heat equalizing member is made of a fiber composite material in which fiber materials are laminated in the radial direction with a base material having lower thermal conductivity than the fiber materials being provided between the fiber materials.

In this fiber composite material, the base material between the fiber materials in the radial direction performs heat insulation, with the result that the thermal conductivity is lowered in the radial direction. This material is therefore suitable as a material of the heat equalizing member.

In the present invention, preferably, the fiber composite material has a structure such that sheet members including the fiber materials and the base material are laminated in the radial direction.

As the fiber composite material is formed by laminating the sheet members, a layer of the base material is provided between each pair of sheet members, and hence the thermal conductivity is further effectively lowered in the radial direction.

In the present invention, preferably, in the fiber composite material, the fiber materials are mainly oriented in the axial direction.

When the fiber materials are mainly oriented in the axial direction, the thermal conductivity is increased in the axial direction, and hence the temperature distribution in the axial direction of the roller surface is further effectively equalized. The phrase "mainly oriented in the axial direction" does not indicate that all fiber materials are oriented in the axial direction, and indicates that more than half of the fiber materials are oriented in the axial direction.

In the present invention, preferably, in the fiber composite material, the fiber materials are randomly oriented in a three dimensional manner.

The manufacturing cost of the randomly-oriented fiber composite material is typically lower than that of the fiber composite material in which the fiber material is oriented in a particular direction. This makes it possible to reduce the manufacturing cost of the heating roller.

In the present invention, preferably, in the heat equalizing member made of the fiber composite material, the minimum filling rate of the fiber materials in a cross section orthogonal to the radial direction, which is obtained at each location in the radial direction, is lower than the minimum filling rate of the fiber materials in a cross section orthogonal to the axial direction, which is obtained at each location in the axial direction.

As detailed later, with this arrangement, because the thermal conductivity in the radial direction is lower than the thermal conductivity in the axial direction, the material is suitable as a material of the heat equalizing member.

In the present invention, preferably, in the heat equalizing member made of the fiber composite material, the minimum filling rate of the fiber materials in the cross section orthogonal to the radial direction, which is obtained at each location in the radial direction, is lower than the minimum filling rate of the fiber materials in a cross section orthogonal to the circumferential direction, which is obtained at each location in the circumferential direction.

As detailed later, with this arrangement, because the thermal conductivity in the radial direction is lower than the thermal conductivity in the circumferential direction, the material is suitable as a material of the heat equalizing member.

In the present invention, preferably, the heat equalizing member made of the fiber composite material is formed to be cylindrical in shape by aligning a plurality of heat equalization pieces in the circumferential direction.

Depending on the manufacturing method of the fiber composite material, it is sometimes difficult to mold a cylindrical equalizing member. In this regard, even when the fiber composite material cannot be easily molded into a cylindrical shape, a cylindrical heat equalizing member can be formed by assembling plural heat equalization pieces as a heat equalizing member.

In the present invention, preferably, the fiber materials are carbon fibers.

The carbon fibers are light and have a high thermal conductivity. As the heat equalizing member is made of the fiber composite material including the carbon fibers, the temperature distribution of the roller surface is further equalized and the weight of the heating roller is further reduced.

In the present invention, preferably, a heat insulation part which has higher heat resistance than at least the inner circumferential surface of the heating target portion and is provided on an inner circumferential surface of the heat equalizing member.

With this heat insulation part, it is possible to further effectively suppress the heat dissipation from the inner circumferential surface of the heat equalizing member and to further efficiently heat the roller surface.

According to a second aspect of the present invention, a heating roller in which a heating target portion of a roller main body is heated includes: a heat equalizing member which is cylindrical in shape and is in contact with an inner circumferential surface of the heating target portion, thermal conductivity in an axial direction of the heat equalizing member being higher than thermal conductivity of at least the inner circumferential surface of the heating target portion; and a heat insulation part which has higher heat resistance than at least the inner circumferential surface of the heating target portion and is provided on an inner circumferential surface of the heat equalizing member.

According to the second aspect of the present invention, the heat insulation part is provided on the inner circumferential surface of the heat equalizing member. With this arrangement, heat dissipation from the inner circumferential surface of the heat equalizing member is suppressed and heat dissipation radially inward from the heating target portion of the roller main body is suppressed, and hence temperature decrease of the roller surface is suppressed.

This makes it possible to efficiently heat the roller surface.

In the present invention, preferably, the heat insulation part is non-magnetic and non-conductive.

When the heat insulation part is non-magnetic and non-conductive, it is possible to suppress magnetic fluxes from passing through the heat insulation part and to suppress an eddy current from flowing in the heat insulation part, when the heating roller is an induction heating roller. On this account, the amount of heat generation at the heating target portion of the roller main body is increased, and the roller surface is efficiently heated.

In the first and second aspects of the present invention, preferably, a coil is provided inside the roller main body, the heating target portion being induction-heated as electric power is supplied to the coil.

In such an induction heating roller, the distribution of heating cannot be finely controlled, and hence the temperature distribution tends to be irregular. The present invention which makes it possible to equalize the temperature distribution on the roller surface by the heat equalizing member is therefore particularly effective.

In the present invention, preferably, the heat equalizing member is lower in relative permeability than the heating target portion.

With this arrangement, when the heating roller is an induction heating roller, magnetic fluxes easily pass through the heating target portion of the roller main body as compared to the heat equalizing member. On this account, the amount of heat generation at the heating target portion of the roller main body is increased, and the roller surface is efficiently heated.

In the present invention preferably, electric resistivity in the circumferential direction of the heat equalizing member is higher than electric resistivity of the heating target portion.

With this arrangement, when the heating roller is an induction heating roller, an amount of an eddy current flowing in the heating target portion of the roller main body is larger than that in the heat equalizing member. On this account, the amount of heat generation at the heating target portion of the roller main body is increased, and the roller surface is efficiently heated.

A spun yarn drawing device of the present invention includes any one of the above-described heating rollers, yarns being wound on an outer circumferential surface of the heating roller to be aligned in the axial direction.

According to the spun yarn drawing device of the present invention, it is possible to equalize the temperature distribution of the roller surface, and to efficiently raise the temperature on the roller surface. This stabilizes the quality of the yarns wound onto the heating roller, to enable production of high-quality yarns.

[Brief Description of Drawings]

FIG. 1 is a schematic diagram of a spun yarn take-up machine including an induction heating roller of an embodiment.
FIG. 2 is a cross section of the induction heating roller of the embodiment, which is taken along an axial direction.
FIG. 3 is a perspective view of a heat equalizing member.
FIG. 4 is a perspective view of a process of manufacturing a heat equalization piece.
FIG. 5 is a perspective view of a heat equalization piece of a modification.
FIG. 6 is a schematic diagram of a heat equalization piece in cross section orthogonal to the circumferential direction and shows the distribution of filling rates of carbon fibers.
FIG. 7 is a schematic diagram of a heat equalization piece in cross section orthogonal to the axial direction and shows the distribution of filling rates of carbon fibers.

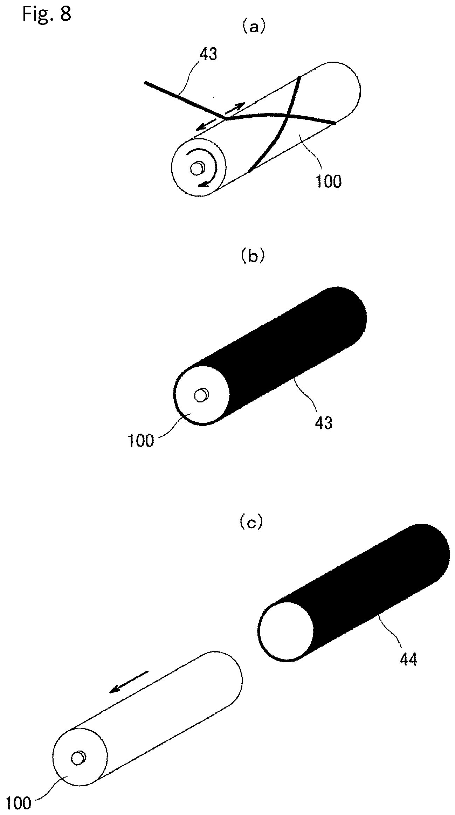

FIG. 8 is a perspective view showing a process of manufacturing a heat equalizing member based on filament winding.
FIG. 9 is a cross section of an induction heating roller of another embodiment, which is taken along the axial direction.

[Description of Embodiments]

(Spun Yarn Take-Up Machine)

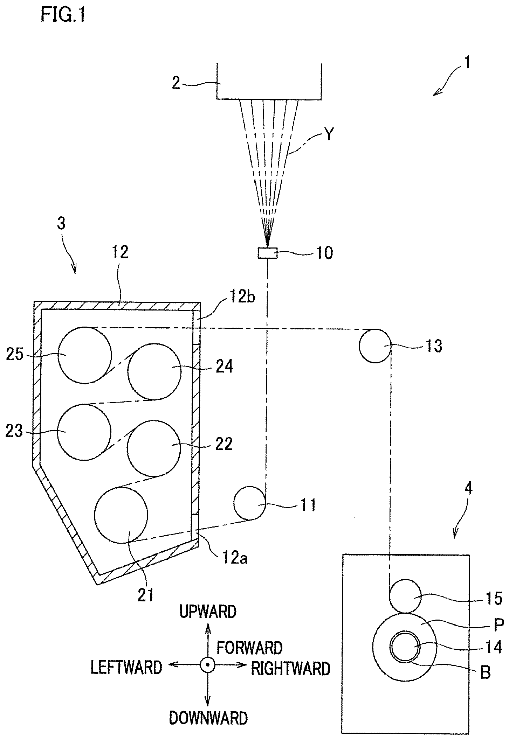

The following will describe an embodiment of the present invention. FIG. 1 is a schematic diagram of a spun yarn take-up machine including an induction heating roller of the present embodiment. As shown in FIG. 1, the spun yarn take-up machine 1 is configured to draw, by a spun yarn drawing device 3, plural (six in this embodiment) yarns Y serially spun out from a spinning apparatus 2 and made of a solidified molten fibrous material such as polyester, and then to wind the yarns Y by a yarn winding apparatus 4. Hereinafter, explanations will be given with reference to the directions shown in the figures.

The spinning apparatus 2 is configured to generate the yarns Y by continuously spinning out a molten fibrous material such as polyester. To the yarns Y spun out from the spinning apparatus 2, oil is applied at an oil guide 10. The yarns Y are then sent to the spun yarn drawing device 3 via a guide roller 11.

The spun yarn drawing device 3 is an apparatus for heating and drawing the yarns Y and is provided below the spinning apparatus 2. The spun yarn drawing device 3 includes plural (five in this embodiment) godet rollers 21 to 25 housed in a thermal insulation box 12. The godet rollers 21 to 25 are induction heating rollers which are rotationally driven by a motor and are induction-heated by power supply to a coil. Yarns Y are wound onto the godet rollers 21 to 25. At a lower part of a right side portion of the thermal insulation box 12, an inlet 12a is formed to introduce yarns Y into the thermal insulation box 12. At an upper part of the right side portion of the thermal insulation box 12, an outlet 12b is formed to take yarns Y out from the thermal insulation box 12. The yarns Y are wound onto each of the godet rollers 21 to 25 at a winding angle of less than 360 degrees. The yarns Y are wound onto the godet rollers 21 to 25 in order, from the lowest godet roller 21.

The lower three godet rollers 21 to 23 are preheating rollers for preliminarily heating the yarns Y before drawing them. The roller surface temperature of each of these rollers is arranged to be equal to or higher than the glass transition temperature of the yarns Y (e.g., set at about 90 to 100 degrees centigrade). Meanwhile, the upper two godet rollers 24 and 25 are conditioning rollers for thermally setting the drawn yarns Y. The roller surface temperature of each of these rollers is arranged to be higher than the roller surface temperatures of the lower three godet rollers 21 to 23 (e.g., set at about 150 to 200 degrees centigrade). The yarn feeding speeds of the upper two godet rollers 24 and 25 are higher than those of the lower three godet rollers 21 to 23.

The yarns Y introduced into the thermal insulation box 12 through the inlet 12a are, to begin with, preliminarily heated to a drawable temperature while being transferred by the godet rollers 21 to 23. The preliminarily-heated yarns Y are drawn on account of a difference in yarn feeding speed between the godet roller 23 and the godet roller 24. The yarns Y are then further heated while being transferred by the godet rollers 24 and 25, with the result that the drawn state is thermally set. The yarns Y having been drawn in this way go out from the thermal insulation box 12 through the outlet 12b.

The yarns Y drawn by the spun yarn drawing device 3 are sent to the yarn winding apparatus 4 via a guide roller 13. The yarn winding apparatus 4 is an apparatus for winding the yarns Y and is provided below the spun yarn drawing device 3. The yarn winding apparatus 4 includes members such as a bobbin holder 14 and a contact roller 15. The bobbin holder 14 is cylindrical in shape and extends in the front-rear direction. The bobbin holder 14 is rotationally driven by an unillustrated motor. To the bobbin holder 14, bobbins B are attached along the axial direction to be side by side. By rotating the bobbin holder 14, the yarn winding apparatus 4 simultaneously winds the yarns Y onto the bobbins B, so as to produce packages P. The contact roller 15 makes contact with the surfaces of the packages P to adjust the shape of each package P by applying a predetermined contact pressure to each package P.

(Induction Heating Roller)

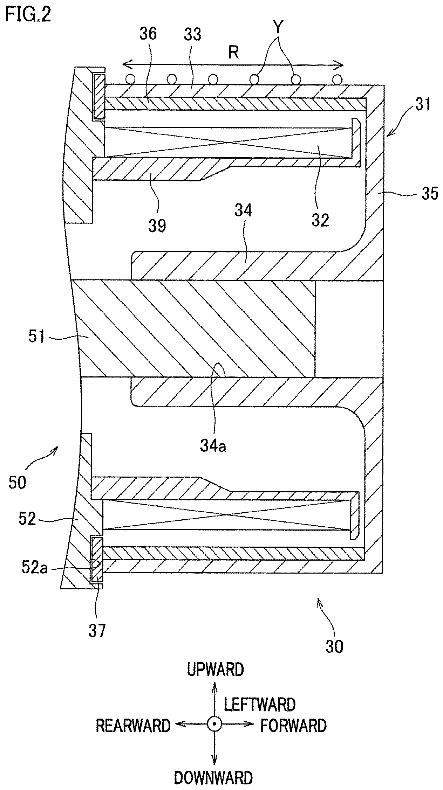

FIG. 2 is a cross section of the induction heating roller 30 of the present embodiment, which is taken along an axial direction. In FIG. 2, only an output shaft 51 and a part of the housing 52 are shown in a motor 50 to which the induction heating roller 30 is connected. The induction heating roller 30 shown in FIG. 2 is applied to all of the godet rollers 21 to 25 in FIG. 1.

The induction heating roller 30 includes a cylindrical roller main body 31 extending along the axial direction (front-rear direction) and a coil 32 provided inside the roller main body 31. When a high-frequency current is supplied to the coil 32, a variable magnetic field is generated around the coil 32. As a result, an eddy current is generated by electromagnetic induction to flow in the outer cylindrical part 33 of the roller main body 31 in the circumferential direction, and the outer cylindrical part 33 is heated by Joule heat generated by the eddy current. The eddy current is generated mainly at around the inner circumferential surface of the outer cylindrical part 33, due to the skin effect.

The roller main body 31 is made of carbon steel which is a magnetic body and a conductor. The roller main body 31 is arranged such that the outer cylindrical part 33 which is cylindrical in shape, a cylindrical shaft center part 34, and a disc-shaped end face part 35 are integrally formed. The outer cylindrical part 33 is provided radially outside the coil 32. The shaft center part 34 is provided radially inside the coil 32. The end face part 35 connects a front end portion of the outer cylindrical part 33 with a front end portion of the shaft center part 34. In this regard, when each of the outer cylindrical part 33 and the end face part 35 is a magnetic body and a conductor, the outer cylindrical part 33 and the end face part 35 may be made of different materials. Even when the outer cylindrical part 33 and the end face part 35 are made of the same material, the outer cylindrical part 33 and the end face part 35 may be different members. The rear end side of the roller main body 31 is open, and the output shaft 51 of the motor 50 is inserted through this opening into the roller main body 31. The shaft center part 34 may not be cylindrical, and may be inclined and circular frustum in shape, for example.

Inside the roller main body 31, a cylindrical heat equalizing member 36 is provided to be in contact with an inner circumferential surface of the outer cylindrical part 33. The outer diameter of the heat equalizing member 36 is substantially identical with the inner diameter of the outer cylindrical part 33, and the outer circumferential surface of the heat equalizing member 36 is entirely in contact with the inner circumferential surface of the outer cylindrical part 33.

When an axially-extending region where yarns Y are wound on a roller surface is a wound region R, the heat equalizing member 36 is provided over a range including the wound region R in the axial direction.

The heat equalizing member 36 can be inserted into the opening on the rear end side of the roller main body 31. The length in the axial direction of the heat equalizing member 36 is substantially identical with the length of the outer cylindrical part 33 of the roller main body 31. The front end portion of the heat equalizing member 36 is in contact with the end face part 35 of the roller main body 31. The rear end portion of the heat equalizing member 36 is fixed to the rear end portion of the outer cylindrical part 33 by an annular fixing member 37. The details of the heat equalizing member 36 will be given later.

At the shaft center part 34 of the roller main body 31, a shaft inserting hole 34a is formed to extend along the axial direction. To the shaft inserting hole 34a, the output shaft 51 of the motor 50 is fixed by an unillustrated fixing member. As a result, the roller main body 31 is cantilevered by the motor 50 and the roller main body 31 is rotatable together with the output shaft 51.

The coil 32 is arranged such that conducting wires are wound onto the outer circumferential surface of a cylindrical bobbin member 39. The bobbin member 39 is made of carbon steel in the same manner as the roller main body 31. Although not illustrated, the bobbin member 39 is not completely cylindrical in shape and is C-shaped in cross section as a part of the member in the circumferential direction is cut out. For this reason, an eddy current is unlikely to flow in the bobbin member 39, with the result that heat generation of the bobbin member 39 is suppressed. The bobbin member 39 is attached to the housing 52 of the motor 50.

In the housing 52, an annular recess 52a is formed. In the recess 52a, the above-described fixing member 37 is provided not to make contact with the surface constituting the recess 52a. The output shaft 51 of the motor 50 is rotatably supported by the housing 52 via an unillustrated bearing. As the motor 50 is driven, the roller main body 31 rotates together with the output shaft 51.

(Heat Equalizing Member)

The heat equalizing member 36 is provided to equalize the temperature distribution on the outer circumferential surface (roller surface) of the outer cylindrical part 33 of the roller main body 31. To achieve this object, the heat equalizing member 36 is required to have a higher thermal conductivity than the roller main body 31. However, when a material having a high thermal conductivity is simply used, radially inward heat movement is significant in the heat equalizing member 36, and hence an amount of dissipated heat from the inner circumferential surface of the heat equalizing member 36 tends to be large. As a result, heat tends to escape radially inward from the outer cylindrical part 33 of the roller main body 31, and hence the roller surface cannot be efficiently heated. In the present embodiment, this problem is resolved by employing an anisotropic material in which thermal conductivity in the radial direction is lower than thermal conductivity in the axial direction as a material of the heat equalizing member 36. To be more specific, the heat equalizing member 36 of the present embodiment is made of a C/C composite (carbon fiber reinforced-carbon matrix-composite) including carbon fibers and graphite.

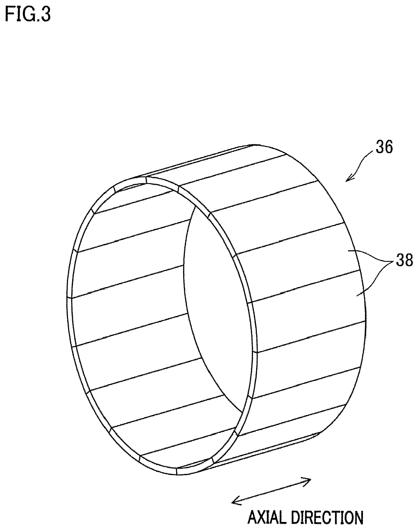

FIG. 3 is a perspective view of the heat equalizing member 36. The heat equalizing member 36 is formed to be cylindrical in shape on the whole. However, as described below, the C/C composite of which the heat equalizing member 36 is made is typically plate-shaped, and is not easily molded into a cylindrical shape. On this account, as described below, the present embodiment is arranged such that the cylindrical heat equalizing member 36 is a group of small plate-shaped heat equalization pieces 38 which are aligned in the circumferential direction.

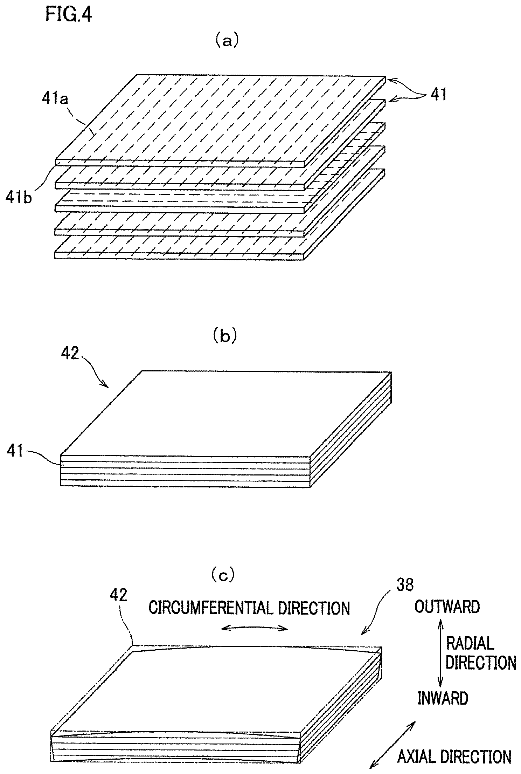

The following will describe a manufacturing method of the heat equalization piece 38. FIG. 4 is a perspective view showing a process of manufacturing the heat equalization piece 38. To produce the C/C composite, to begin with, plural sheet members 41 are prepared as shown in FIG. 4(a). Each sheet member 41 is a sheet-shaped member including carbon fibers 41a oriented in a particular direction and a base material 41b made of resin and pitch. The sheet members 41 are laminated such that the carbon fibers 41 are basically oriented in the same direction. However, in order to prevent the strength of the heat equalization piece from being weak in a particular direction, at least one sheet member 41 (e.g., the third sheet member 41 from the top in FIG. 4(a)) is laminated so that the orientation direction of the carbon fibers 41a of this sheet member intersects with the orientation direction of the carbon fibers of the other sheet members. While in FIG. 4(a) the orientation direction of the carbon fibers 41a of the third sheet member 41 from the top is orthogonal to the orientation direction of the carbon fibers of the other sheet members, these orientation directions may not be orthogonal to each other. Because each carbon fiber is extremely narrow, carbon fibers are typically used as a fiber bundle in which plural fibers are bundled. In the present embodiment, the carbon fibers are pitch-based carbon fibers having a high thermal conductivity.

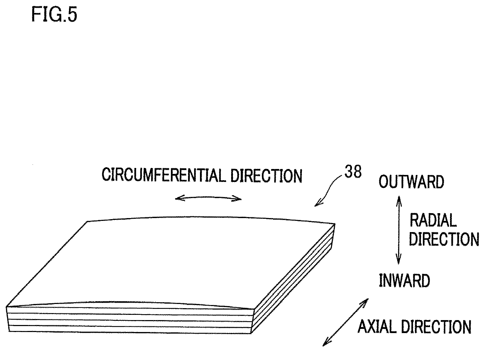

Subsequently, the laminated sheet members 41 are baked and the base material 41b is carbonized. As a result, a thin plate member 42 which is rectangular parallelepiped in shape is obtained as shown in FIG. 4(b). The thermal conductivity of the base material 41b which has been carbonized and has become graphite is lower than the thermal conductivity of the carbon fibers 41a. The plate member 42 cannot be provided along the inner circumferential surface of the outer cylindrical part 33 of the roller main body 31. On this account, as shown in FIG. 4(c), the plate member 42 is partially cut so that the surface of the plate member 42 is circular-arc-shaped. In this way, the formation of the heat equalization piece 38 is completed. While in FIG. 4(c) not only the outer circumferential surface but also the inner circumferential surface of the heat equalization piece 38 are circular-arc-shaped, the inner circumferential surface may not be circular-arc-shaped. For example, as shown in FIG. 5, the inner circumferential surface of the heat equalization piece 38 may be flat. This arrangement makes it possible to reduce the number of steps of the processing of the plate member 42.

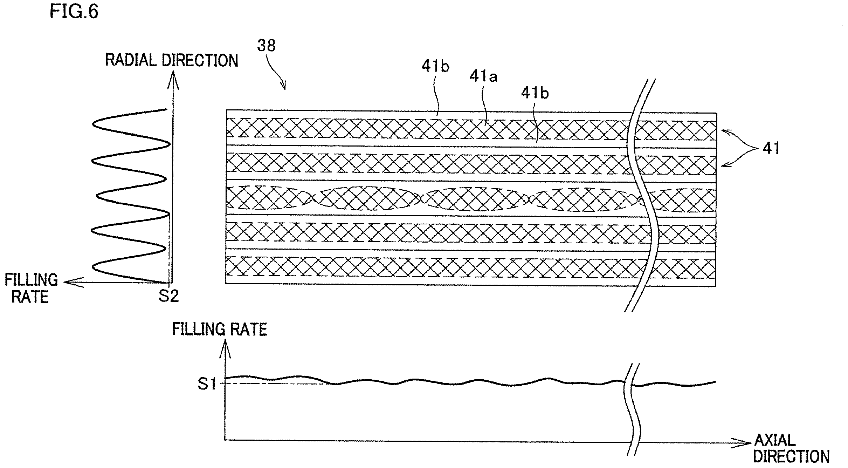

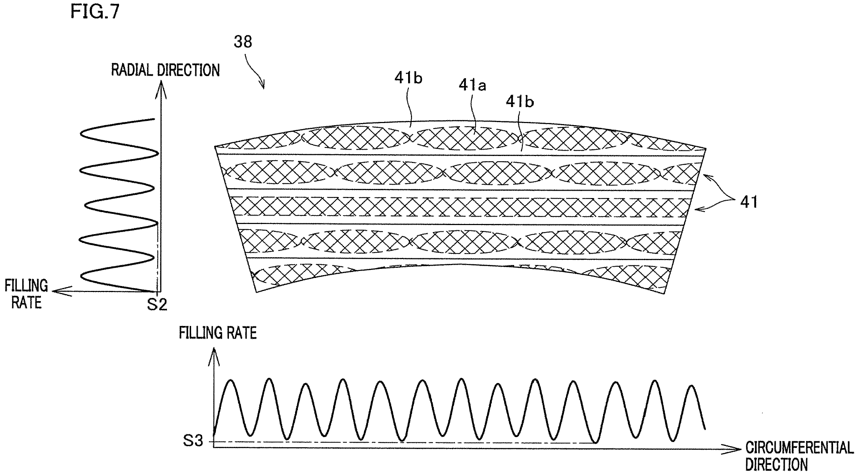

The heat equalization piece 38 is arranged so that the direction in which the sheet members 41 are laminated is identical with the radial direction of the induction heating roller 30 and the main orientation direction of the carbon fibers 41a is identical with the axial direction of the induction heating roller 30. While the boundary surface between neighboring sheet members 41 is shown for the sake of convenience in FIG. 4 and FIG. 5, in reality the base materials 41b of the sheet members 41 are continuous, and hence the boundary surface cannot be observed. (The same applies to FIG. 6 and FIG. 7).

The internal structure of the heat equalization piece 38 manufactured as described above will be detailed. FIG. 6 is a schematic diagram of the heat equalization piece 38 in cross section orthogonal to the circumferential direction and shows the distribution of filling rates of carbon fibers 41a. FIG. 7 is a schematic diagram of the heat equalization piece 38 in cross section orthogonal to the axial direction and shows the distribution of filling rates of carbon fibers 41a. The filling rate of the carbon fibers 41a indicates the rate of the area where the carbon fibers 41a (fiber bundles in reality) exist in a cross section. Hereinafter, a filling rate of the carbon fibers 41a will be simply referred to as a filling rate. In the cross sections shown in FIG. 6 and FIG. 7, the carbon fibers 41a in the form of fiber bundles are schematically shown.

In FIG. 6, a graph provided to the left of the cross section of the heat equalization piece 38 indicates a filling rate in the cross section orthogonal to the radial direction, at each location (in reality, at each distance) in the radial direction of the heat equalization piece 38. A graph provided below the cross section of the heat equalization piece 38 indicates a filling rate in the cross section orthogonal to the axial direction, at each location (in reality, at each distance) in the axial direction of the heat equalization piece 38. Similarly, in FIG. 7, a graph provided to the left of the cross section of the heat equalization piece 38 indicates a filling rate in the cross section orthogonal to the radial direction, at each location (in reality, at each distance) in the radial direction of the heat equalization piece 38 (as in FIG. 6). A graph provided below the cross section of the heat equalization piece 38 indicates a filling rate in the cross section orthogonal to the circumferential direction, at each location (in reality, at each distance) in the circumferential direction of the heat equalization piece 38.

In the heat equalization piece 38 in which the sheet members 41 are laminated, the boundary surface and its surroundings between neighboring sheet members 41 are mainly occupied by the base material 41b. For this reason, the filling rate is extremely low at around the boundary surface, and hence the filling rates are significantly different in the radial direction (see FIG. 6 and FIG. 7). Meanwhile, because the carbon fibers 41a are mainly oriented in the axial direction, the filling rates are less different in the axial direction, and are almost constant at relatively high rates (see FIG. 6). Furthermore, because the carbon fibers 41a are mainly oriented in the axial direction, gaps between the carbon fibers 41 are often filled with the base material 41b in the circumferential direction. The filling rates are therefore significantly different in the circumferential direction (see FIG. 7).

The thermal conductivity of the heat equalization piece 38 in a particular direction is significantly correlated with differences between the filling rates in that direction. In other words, when, in a particular direction, there is a portion where the filling rate is low, the thermal conductivity is low at that portion, with the result that the thermal conductivity of the entire heat equalization piece 38 is low in the particular direction. Meanwhile, when the filling rates are more or less constant at relatively high rates in a particular direction, heat conduction in that direction is facilitated along the carbon fibers 41a, and hence the thermal conductivity of the heat equalization piece 38 is high. The present inventors have found that these characteristics can be indexed based on minimum filling rates S1 to S3 in a cross section orthogonal to a particular direction. S1 is the minimum filling rate in a cross section orthogonal to the axial direction, S2 is the minimum filling rate in a cross section orthogonal to the radial direction, and S3 is the minimum filling rate in a cross section orthogonal to the circumferential direction.

In the example shown in FIG. 6, S2 is lower than S1. This indicates that, in the heat equalization piece 38, the thermal conductivity in the radial direction is lower than the thermal conductivity in the axial direction. Similarly, in the example shown in FIG. 7, S2 is nearly equal to S3. This indicates that, in the heat equalization piece 38, the thermal conductivity in the radial direction is more or less identical with the thermal conductivity in the circumferential direction.

| | MATERIAL | | THERMAL CONDUCTIVITY [W/(m·K)] | ELECTRIC RESISTMTY [$\mu\Omega\cdot$cm] | RELATIVE PERMEABILITY [-] | DENSITY [g/cm$^3$] |
|---|---|---|---|---|---|---|
| ROLLER MAIN BODY | CARBON STEEL | | 51.5 | 11.8 | 100~2000 | 7.8 |
| HEAT EQUALIZING MEMBER | C/C COMPOSITE (ORIENTED IN AXIAL DIRECTION) | AXIAL DIRECTION | 400 | 400 | 1.0 | 1.6 |
| | | CIRCUMFERENTIAL DIRECTION | 15 | 13000 | | |
| | | RADIAL DIRECTION | 15 | 13000 | | |
| | C/C COMPOSITE (RANDOMLY ORIENTED) | AXIAL DIRECTION | 140 | 1000 | 1.0 | 1.6 |
| | | CIRCUMFERENTIAL DIRECTION | 100 | 1400 | | |
| | | RADIAL DIRECTION | 30 | 4900 | | |

The above is a table of physical properties of the roller main body 31 and the heat equalizing member 36. Each of physical properties shown above is a value at room temperatures. (The same applies to the table in [0087] .) Because the heat equalizing member 36 is formed of the above-described heat equalization pieces 38, the thermal conductivity in the axial direction of the heat equalizing member 36 (i.e., the C/C composite oriented in the axial direction) is higher than the thermal conductivity of the roller main body 31 (outer cylindrical part 33). It is therefore possible to equalize the temperature distribution in the axial direction of the roller surface, which is important for producing yarns Y with stable quality. As long as the thermal conductivity in the axial direction of the heat equalizing member 36 is higher than at least the thermal conductivity of the inner circumferential surface of the outer cylindrical part 33, the effect of equalizing the temperature distribution of the roller surface can be obtained. In the heat equalizing member 36, the thermal conductivity in the radial direction is lower than the thermal conductivity in the axial direction. Because the heat conduction radially inward from the outer cylindrical part 33 of the roller main body 31 is suppressed, it is possible to efficiently heat the roller surface.

The heat equalizing member 36 made of the C/C composite is advantageous in the following points. The C/C composite is a non-magnetic member and has a lower relative permeability than carbon steel of which the roller main body 31 (outer cylindrical part 33) is made. On this account, magnetic fluxes easily pass through the outer cylindrical part 33 of the roller main body 31 as compared to the heat equalizing member 36, with the result that the amount of heat generation at the outer cylindrical part 33 is increased. Furthermore, the electric resistivity in the circumferential direction of the C/C composite is higher than the electric resistivity of the roller main body 31 (outer cylindrical part 33). On this account, an amount of the eddy current flowing in the outer cylindrical part 33 is larger than that in the heat equalizing member 36, with the result that the amount of heat generation at the outer cylindrical part 33 is increased. As a result, the roller surface is further efficiently heated. In addition to the above, the C/C composite excels in heat resistance and is very light, and hence the C/C composite is suitably used as a material of the induction heating roller 30.

(Advantageous Effects)

As described above, in the present embodiment, the thermal conductivity in the radial direction is arranged to be lower than the thermal conductivity in the axial direction in the heat equalizing member 36. With this arrangement, heat dissipation radially inward from the outer cylindrical part 33 (equivalent to a heating target portion of the present invention) of the roller main body 31 is suppressed, and hence temperature decrease of the roller surface is suppressed. This makes it possible to efficiently heat the roller surface.

In the present embodiment, the heat equalizing member 36 is made of a fiber composite material in which fiber materials 41 are laminated in the radial direction with a base material 41b having a lower thermal conductivity than the fiber materials 41a being provided between the fiber materials 41a. In this fiber composite material, the base material 41b between the fiber materials 41a in the radial direction performs heat insulation, with the result that the thermal conductivity is lowered in the radial direction. This material is therefore suitable as a material of the heat equalizing member 36.

In the present embodiment, the fiber composite material is structured such that sheet members 41 including fiber materials 41a and the base materials 41b are laminated in the radial direction. As the fiber composite material is formed by laminating the sheet members 41, a layer of the base material 41b is provided between each pair of sheet members 41, and hence the thermal conductivity is further effectively lowered in the radial direction.

In the present embodiment, the fiber composite material is structured such that the fiber materials 41a are mainly oriented in the axial direction. When the fiber materials 41a are mainly oriented in the axial direction, the thermal conductivity is increased in the axial direction, and hence the temperature distribution in the axial direction of the roller surface is further effectively equalized. The phrase "mainly oriented in the axial direction" does not indicate that all fiber materials 41a are oriented in the axial direction, and indicates that more than half of the fiber materials 41a are oriented in the axial direction.

In the present embodiment, in the heat equalizing member 36 made of the fiber composite material, the minimum filling rate S2 of the fiber material 41a in a cross section orthogonal to the radial direction, which is obtained at each location in the radial direction, is lower than the minimum filling rate S1 of the fiber material 41a in a cross section orthogonal to the axial direction, which is obtained at each location in the axial direction. With this arrangement, because the thermal conductivity in the radial direction is lower than the thermal conductivity in the axial direction, the material is suitable as a material of the heat equalizing member 36.

In the present embodiment, the heat equalizing member 36 made of the fiber composite material is a cylindrical member formed by aligning plural heat equalization pieces 38 in the circumferential direction. Depending on the manufacturing method of the fiber composite material, it is sometimes difficult to mold a cylindrical equalizing member. In this regard, even when the fiber composite material cannot be easily molded into a cylindrical shape, a cylindrical heat equalizing member 36 can be formed by assembling plural heat equalization pieces 38 as a heat equalizing member 36.

In the present embodiment, the fiber material 41a is carbon fibers. The carbon fibers are light and have a high thermal conductivity. As the heat equalizing member 36 is made of the fiber composite material including the carbon fibers, the temperature distribution of the roller surface is further equalized and the weight of the heating roller 30 is further reduced.

In the present embodiment, the carbon fibers are pitch-based carbon fibers. The pitch-based carbon fibers using pitch and PAN-based carbon fibers using acrylic fibers have been known as the carbon fibers. The thermal conductivity of the pitch-based carbon fibers is higher than that of the PAN-based carbon fibers. On this account, when the pitch-based carbon fibers are employed, the thermal conductivity of the heat equalizing member 36 is further improved and the temperature distribution on the roller surface is further effectively equalized.

In the present embodiment, the fiber composite material is a C/C composite (carbon fiber reinforced-carbon matrix-composite) including carbon fibers and graphite. The C/C composite has a high thermal conductivity among fiber composite materials including carbon fibers, and has high heat resistance, too. Accordingly, when the heat equalizing member 36 is made of the C/C composite, the temperature distribution of the roller surface is further effectively equalized and the heating roller 30 has high heat resistance.

In the present embodiment, the coil 32 is provided inside the roller main body 31 and the outer cylindrical part 33 is induction-heated as electric power is supplied to the coil 32. In such an induction heating roller 30, the distribution of heating cannot be finely controlled, and hence the temperature distribution tends to be irregular. The present invention which makes it possible to equalize the temperature distribution on the roller surface by the heat equalizing member 36 is therefore particularly effective.

In the present embodiment, the relative permeability of the heat equalizing member 36 is lower than that of the outer cylindrical part 33. With this arrangement, when the heating roller 30 is an induction heating roller, magnetic fluxes easily pass through the outer cylindrical part 33 of the roller main body 31 as compared to the heat equalizing member 36. On this account, the amount of heat generation at the outer cylindrical part 33 of the roller main body 31 is increased, and the roller surface is efficiently heated.

In the present embodiment, the electric resistivity in the circumferential direction of the heat equalizing member 36 is higher than the electric resistivity of the outer cylindrical part 33. With this arrangement, when the heating roller 30 is an induction heating roller, an amount of an eddy current flowing in the outer cylindrical part 33 of the roller main body 31 is larger than that in the heat equalizing member 36. On this account, the amount of heat generation at the outer cylindrical part 33 of the roller main body 31 is increased, and the roller surface is efficiently heated.

When the relative permeability of the heat equalizing member 36 is arranged to be lower than that of the outer cylindrical part 33 and the electric resistivity in the circumferential direction of the heat equalizing member 36 is arranged to be higher than that of the outer cylindrical part 33 as in the present embodiment, the effect of increasing the amount of heat generated at the outer cylindrical part 33 of the roller main body 31 is further enhanced, and hence the roller surface is further efficiently heated.

In the present embodiment, plural yarns Y are wound onto the outer circumferential surface of the heating roller 30 to be aligned in the axial direction. As described above, the heating roller 30 of the present embodiment makes it possible to equalize the temperature distribution on the roller surface and to efficiently heat the roller surface. This stabilizes the quality of yarns Y wound onto the heating roller 30 and makes it to produce high-quality yarns.

(Modification 1 of Heat Equalizing Member)

While in the embodiment above the heat equalizing member 36 in which the carbon fibers 41a are mainly oriented in the axial direction is used, the carbon fibers 41a may not be oriented in the axial direction. For example, the heat equalizing member 36 may be made of a C/C composite which is structured such that sheet members in each of which carbon fibers are randomly oriented in three dimensions are laminated. Also in this case, the boundary surface and its surroundings between neighboring sheet members are mainly occupied by the base material, and hence the thermal conductivity is low in the radial direction.

When the carbon fibers are randomly oriented, the relationship between the above-described filling rates is as follows: S2<S1 and S2<S3. As a result, as shown in the table in [0065], the thermal conductivity in the radial direction is lower than the thermal conductivity in the axial direction in the heat equalizing member 36, even though the carbon fibers are randomly oriented. Furthermore, the thermal conductivity in the circumferential direction is higher than the thermal conductivity in the radial direction. Because the thermal conductivity in the circumferential direction is higher than the thermal conductivity in the radial direction in this way, the temperature distribution is effectively equalized not only in the axial direction but also in the circumferential direction. Furthermore, the manufacturing cost of the fiber composite material in which the fiber material is randomly oriented is typically lower than that of the fiber composite material in which the fiber material is oriented in a particular direction. This makes it possible to reduce the manufacturing cost of the heating roller 30.

(Modification 2 of Heat Equalizing Member)

While in the embodiment above the heat equalizing member 36 is made of the C/C composite, the equalizing member may be made of another fiber composite material. For example, the heat equalizing member may be made of CFRP (carbon fiber reinforced plastic) which is a fiber composite material of carbon fibers and resin (e.g., epoxy resin). CFRP is inferior to the C/C composite in heat resistance but is cheaper than the C/C composite. When the heating roller 30 is not required to have high heat resistance, cost reduction is achieved by making the heat equalizing member 36 of CFRP. Furthermore, the carbon fibers of which the heat equalizing member 36 is made may be PAN-based carbon fibers using acrylic fibers, instead of the pitch-based carbon fibers. The fiber material may not be carbon fibers.

(Modification 3 of Heat Equalizing Member)

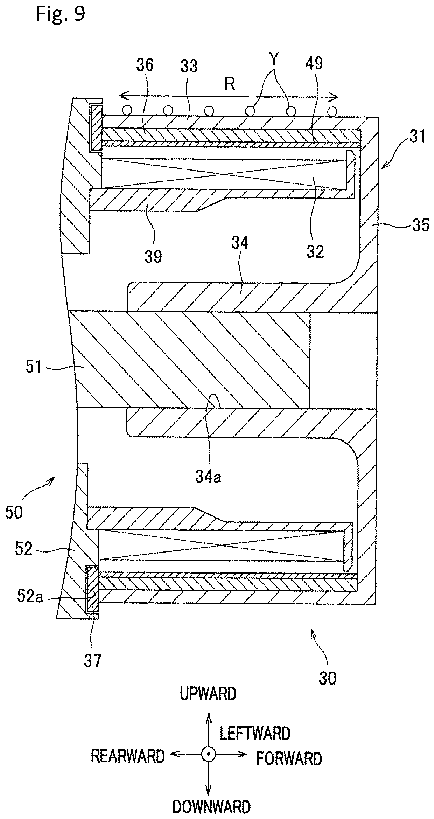

While the embodiment above describes the method of manufacturing the heat equalizing member 36 made of the C/C composite by laminating the sheet members 41, the heat equalizing member 36 may be manufactured by a different method. For example, to manufacture a heat equalizing member made of the above-described CFRP, filament winding may be used. FIG. 9 is a perspective view showing a process of manufacturing a heat equalizing member 44 based on filament winding.

In the filament winding, to begin with, as shown in FIG. 9 (a), a fiber bundle 43 is wound onto the outer circumferential surface of a cylindrical mandrel 100. The mandrel 100 is supported by an unillustrated supporter to be rotatable about a shaft. The fiber bundle 43 is wound onto the rotating mandrel 100 while the fiber bundle 43 is being moved in the axial direction. The fiber bundle 43 is made of plural carbon fibers and is impregnated with a liquid base material in advance.

As shown in FIG. 9(b), the fiber bundle 43 is wound onto the entire outer circumferential surface of the mandrel 100 so that plural layers of the fiber bundle 43 are formed. Thereafter, the fiber bundle 43 is baked. As a result, as shown in FIG. 9(c), after the mandrel 100 is pulled off, the manufacturing of the cylindrical heat equalizing member 44 made of CFRP is completed. In this heat equalizing member 44, the fiber bundle 43 is wound to form layers in the radial direction. On this account, the carbon fibers are laminated in the radial direction with the base material being provided therebetween, and hence the thermal conductivity is low in the radial direction. In this way, even if a method different from the lamination of sheet members is employed, the thermal conductivity is lowered in the radial direction as long as the base material exists between the fiber materials in the radial direction. Furthermore, because the cylindrical heat equalizing member 44 is directly obtained by the filament winding, steps of manufacturing and assembling the heat equalization pieces 38 are unnecessary.

[Other embodiments]

(1) In the embodiment above, the heat equalizing member 36 is made of the fiber composite material such as the C/C composite. Alternatively, for example, the heat equalizing member 36 may be made of a metal material having a higher thermal conductivity than the roller main body 31, such as aluminum or copper (see the table below), so that the equalization of the temperature distribution on the roller surface is achieved both in the axial direction and the circumferential direction. However, when the heat equalizing member 36 is made of such an isotropic metal material, radially inward heat conduction tends to occur, and hence an amount of dissipated heat from the inner circumferential surface of the heat equalizing member 36 tends to be large.

| | MATERIAL | THERMAL CONDUCTIVITY [W/(m·K)] | ELECTRIC RESISTMTY [$\mu\Omega$·cm] | RELATIVE PERMEABILITY [-] | DENSITY [g/cm$^3$] |
|---|---|---|---|---|---|
| ROLLER MAIN BODY | CARBON STEEL | 51.5 | 11.8 | 100~2000 | 7.8 |
| HEAT EQUALIZING MEMBER | ALUMINUM | 222 | 3.0 | 1.0 | 2.7 |
| | COPPER | 255 | 1.86 | 1.0 | 8.9 |

On this account, as shown in FIG. 10, a heat insulation part 49 having higher heat resistance than at least the inner circumferential surface of the outer cylindrical part 33 is provided on the inner circumferential surface of the heat equalizing member 36. This heat insulation part 49 may be integrated with the inner circumferential surface of the heat equalizing member 36, or may be a member which is independent from the heat equalizing member 36 but is in contact with the inner circumferential surface of the heat equalizing member 36. With the heat insulation part 49, it is possible to suppress the heat dissipation from the inner circumferential surface of the heat equalizing member 36 and to efficiently heat the roller surface. Furthermore, because the heat equalizing member 36 is made of a prevalent isotropic material, the heat equalizing member 36 is inexpensive. Furthermore, the metal material is typically easily processed as compared to the fiber composite material, and can be easily molded into a cylindrical shape. It is therefore possible to relatively easily manufacture the cylindrical heat equalizing member 36.

The heat insulation part 49 is preferably non-magnetic and non-conductive. With this arrangement, it is possible to suppress the magnetic fluxes from passing through the heat insulation part 49 and to suppress an eddy current from flowing in the heat insulation part 49. On this account, the amount of heat generation at the outer cylindrical part 33 of the roller main body 31 is increased, and the roller surface is efficiently heated. To be more specific, a material suitable for the heat insulation part 49 is a glass wool sheet and a heat insulation coating such as ceramic-containing coating, which is non-magnetic and non-conductive, is light (e.g., the specific weight is about 2.0 or lower), and excels in heat resistance (e.g., the heat resisting temperature is about 180 degrees centigrade or higher). In accordance with the required heat resisting temperature, a foamed material (e.g., the heat resisting temperature is about 120 degrees centigrade or higher) such as a phenol foamed material may be used.

The above-described heat resistance can be obtained by the following equation.

$$\text{Heat Resistance } (m^2 \cdot K)/W] = \text{Thickness } [m] / \text{Thermal Conductivity } [W/(m \cdot K)]$$

In other words, when the type of the heat insulation part 49 is determined, the thickness of the heat insulation part 49 is determined so that the heat resistance is higher than that of the outer cylindrical part 33 of the roller main body 31 in accordance with the thermal conductivity. For example, when the thickness of the outer cylindrical part 33 of the roller main body 31 is 8 mm and the thermal conductivity is 51.5 [W/(m·K)], the heat resistance of the outer cylindrical part 33 is $1.6 \times 10^{-4}$[(m2·K)/W]. Meanwhile, for example, when glass wool which is 2 mm thick and has a thermal conductivity of 0.05 [W/(m·K)] is used for the heat insulation part 49, the heat resistance of the heat insulation part 49 is 0.04 [(m2·K)/W]. This value is sufficiently higher than the heat resistance of the outer cylindrical part 33. Furthermore, another member may be provided further radially inside the heat insulation part 49. In this case, the member which exists between the outer cylindrical part 33 of the roller main body 31 and the heat insulation part 49 in the radial direction functions as a heat equalizing member.

As shown in the table in [0087], aluminum and copper are non-magnetic and have lower relative permeability than the carbon steel of which the roller main body 31 (outer cylindrical part 33) is made. On this account, magnetic fluxes easily pass through the outer cylindrical part 33 of the roller main body 31 as compared to the heat equalizing member 36. On this account, the amount of heat generation at the outer cylindrical part 33 of the roller main body 31 is increased, and the roller surface is efficiently heated.

When an isotropic material such as a metal material, e.g., carbon steel, aluminum, and copper is used, each of the physical properties has a unique value irrespective of the direction. On this account, in the case of the isotropic material, a physical property which is specified as "in the axial direction", "in the circumferential direction" or "in the radial direction" indicates such a unique value.

(2) As in the embodiment above, when the heat equalizing member 36 is made of the fiber composite material such as the C/C composite, a heat insulation part similar to the heat insulation part 49 shown in FIG. 10 may be provided on the inner circumferential surface of the heat equalizing member 36. With this arrangement, it is possible to further effectively suppress the heat dissipation from the inner circumferential surface of the heat equalizing member 36 and to further efficiently heat the roller surface.

(3) In the embodiment above, the roller main body 31 is cantilevered. Alternatively, the roller main body 31 may be supported on both sides.

(4) In the embodiment above, because plural yarns Y are wound on one induction heating roller 30, differences in quality between the yarns Y are advantageously suppressed as the temperature distribution in the axial direction of the roller surface is equalized. As a matter of course, the present invention is applicable to an induction heating roller on which a single yarn is wound.

(5) In the embodiment above, the heating roller of the present invention is applied to the induction heating roller 30.

The present invention, however, is applicable to those other than induction heating rollers.

(6) The embodiment above describes the heating roller 30 configured to heat the yarns Y. In this regard, the use of the heating roller 30 is not limited for heating the yarns Y. The roller may be used for heating materials other than the yarns Y, such as a film and paper.

[Reference Signs List]

3 spun yarn drawing device
30 induction heating roller (heating roller)
31 roller main body
32 coil
33 outer cylindrical part (heating target portion)
36 heat equalizing member
38 heat equalization piece
41 sheet member
41a carbon fiber (fiber material)
41b base material
49 heat insulation part
Y yarn

**Claims**

1.  A heating roller (30) in which a heating target portion (33) of a roller main body (31) is heated, comprising

    a heat equalizing member (36) which is cylindrical in shape and is in contact with an inner circumferential surface of the heating target portion (33),
    **characterized in that** thermal conductivity in an axial direction of the heat equalizing member (36) is higher than thermal conductivity of at least the inner circumferential surface of the heating target portion (33), and
    in the heat equalizing member (36), thermal conductivity in a radial direction is lower than thermal conductivity in the axial direction.

2.  The heating roller (30) according to claim 1, wherein, in the heat equalizing member (36), thermal conductivity in a circumferential direction is higher than the thermal conductivity in the radial direction.

3.  The heating roller (30) according to claim 1 or 2, wherein, the heat equalizing member (36) is made of a fiber composite material in which fiber materials (41a) are laminated in the radial direction with a base material (41b) having lower thermal conductivity than the fiber materials (41a) being provided between the fiber materials (41a).

4.  The heating roller (30) according to claim 3, wherein, the fiber composite material has a structure such that sheet members (41) including the fiber materials (41a) and the base material (41b) are laminated in the radial direction.

5.  The heating roller (30) according to claim 3 or 4, wherein, in the fiber composite material, the fiber materials (41a) are mainly oriented in the axial direction.

6.  The heating roller (30) according to claim 3 or 4, wherein, in the fiber composite material, the fiber materials (41a) are randomly oriented in a three dimensional manner.

7.  The heating roller (30) according to any one of claims 3 to 6, wherein, in the heat equalizing member (36) made of the fiber composite material, the minimum filling rate of the fiber materials (41a) in a cross section orthogonal to the radial direction, which is obtained at each location in the radial direction, is lower than the minimum filling rate of the fiber materials (41a) in a cross section orthogonal to the axial direction, which is obtained at each location in the axial direction.

8.  The heating roller (30) according to any one of claims 3 to 7, wherein, in the heat equalizing member (36) made of the fiber composite material, the minimum filling rate of the fiber materials (41a) in the cross section orthogonal to the radial direction, which is obtained at each location in the radial direction, is lower than the minimum filling rate of the fiber materials (41a) in a cross section orthogonal to the circumferential direction, which is obtained at each location in the circumferential direction.

9. The heating roller (30) according to any one of claims 3 to 8, wherein, the heat equalizing member (36) made of the fiber composite material is formed to be cylindrical in shape by aligning a plurality of heat equalization pieces (38) in the circumferential direction.

10. The heating roller (30) according to any one of claims 3 to 9, wherein, the fiber materials (41a) are carbon fibers.

11. The heating roller (30) according to any one of claims 1 to 10, wherein, a heat insulation part (49) having higher heat resistance than at least the inner circumferential surface of the heating target portion (33) is provided on an inner circumferential surface of the heat equalizing member (36).

12. A heating roller (30) in which a heating target portion (33) of a roller main body (31) is heated, comprising:

a heat equalizing member (36) which is cylindrical in shape and is in contact with an inner circumferential surface of the heating target portion (33),
**characterized in that** thermal conductivity in an axial direction of the heat equalizing member (36) is higher than thermal conductivity of at least the inner circumferential surface of the heating target portion (33), and by further comprising a heat insulation part (49) which has higher heat resistance than at least the inner circumferential surface of the heating target portion (33) and is provided on an inner circumferential surface of the heat equalizing member (36).

13. The heating roller (30) according to claim 12, wherein, the heat insulation part (49) is non-magnetic and nonconductive.

14. The heating roller (30) according to any one of claims 1 to 13, further comprising a coil (32) which is provided inside the roller main body (31),
the heating target portion (33) being induction-heated as electric power is supplied to the coil (32).

15. The heating roller (30) according to any one of claims 1 to 14, wherein, the heat equalizing member (36) is lower in relative permeability than the heating target portion (33).

16. The heating roller (30) according to any one of claims 1 to 15, wherein, electric resistivity in the circumferential direction of the heat equalizing member (36) is higher than electric resistivity of the heating target portion (33).

17. A spun yarn drawing device including the heating roller (30) of any one of claims 1 to 16, wherein,
yarns (Y) are wound on an outer circumferential surface of the heating roller (30) to be aligned in the axial direction.


**Patentansprüche**

1. Heizwalze (30), in der ein Heizzielabschnitt (33) eines Walzenhauptkörpers (31) erwärmt wird, umfassend

ein Wärmeausgleichselement (36), das eine zylindrische Form aufweist und mit einer inneren Umfangsoberfläche des Heizzielabschnitts (33) in Kontakt vorliegt,
**dadurch gekennzeichnet, dass** die Wärmeleitfähigkeit in einer axialen Richtung des Wärmeausgleichselements (36) höher ist als die Wärmeleitfähigkeit von mindestens der inneren Umfangsoberfläche des Heizzielabschnitts (33), und
in dem Wärmeausgleichselement (36) die Wärmeleitfähigkeit in einer radialen Richtung geringer ist als die Wärmeleitfähigkeit in der axialen Richtung.

2. Heizwalze (30) nach Anspruch 1, wobei in dem Wärmeausgleichselement (36) die Wärmeleitfähigkeit in einer Umfangsrichtung höher ist als die Wärmeleitfähigkeit in der radialen Richtung.

3. Heizwalze (30) nach Anspruch 1 oder 2, wobei das Wärmeausgleichselement (36) aus einem Faserverbundmaterial hergestellt ist, bei dem Fasermaterialien (41a) in der radialen Richtung mit einem Basismaterial (41b), das zwischen den Fasermaterialien (41a) bereitgestellt ist, laminiert sind, das eine geringere Wärmeleitfähigkeit als die Fasermaterialien (41a) aufweist.

4. Heizwalze (30) nach Anspruch 3, wobei das Faserverbundmaterial eine Struktur derart aufweist, dass Flächengebildeelemente (41) einschließlich der Fasermaterialien (41a) und des Basismaterials (41b) in radialer Richtung laminiert sind.

5. Heizwalze (30) nach Anspruch 3 oder 4, wobei in dem Faserverbundmaterial die Fasermaterialien (41a) überwiegend in der axialen Richtung orientiert sind.

6. Heizwalze (30) nach Anspruch 3 oder 4, wobei in dem Faserverbundmaterial die Fasermaterialien (41a) zufällig auf eine dreidimensionale Weise orientiert sind.

7. Heizwalze (30) nach einem der Ansprüche 3 bis 6, wobei in dem Wärmeausgleichselement (36), das aus dem Faserverbundmaterial hergestellt ist, der minimale Füllgrad der Fasermaterialien (41a) in einem Querschnitt orthogonal zu der radialen Richtung, der an jedem Ort in der radialen Richtung erhalten wird, geringer als der minimale Füllgrad der Fasermaterialien (41a) in einem Querschnitt orthogonal zu der axialen Richtung ist, der an jedem Ort in der axialen Richtung erhalten wird.

8. Heizwalze (30) nach einem der Ansprüche 3 bis 7, wobei in dem Wärmeausgleichselement (36), das aus dem Faserverbundmaterial hergestellt ist, der minimale Füllgrad der Fasermaterialien (41a) in dem Querschnitt orthogonal zu der radialen Richtung, der an jedem Ort in der radialen Richtung erhalten wird, geringer als der minimale Füllgrad der Fasermaterialien (41a) in einem Querschnitt orthogonal zu der Umfangsrichtung ist, der an jedem Ort in der Umfangsrichtung erhalten wird.

9. Heizwalze (30) nach einem der Ansprüche 3 bis 8, wobei das Wärmeausgleichselement (36), das aus dem Faserverbundmaterial hergestellt ist, durch Ausrichten einer Vielzahl von Wärmeausgleichsstücken (38) in der Umfangsrichtung in zylindrischer Form ausgebildet ist.

10. Heizwalze (30) nach einem der Ansprüche 3 bis 9, wobei die Fasermaterialien (41a) Kohlenstofffasern sind.

11. Heizwalze (30) nach einem der Ansprüche 1 bis 10, wobei ein Wärmeisolationsteil (49) mit höherem Wärmewiderstand als mindestens die innere Umfangsoberfläche des Heizzielabschnitts (33) auf einer inneren Umfangsoberfläche des Wärmeausgleichselements (36) bereitgestellt ist.

12. Heizwalze (30), in der ein Heizzielabschnitt (33) eines Walzenhauptkörpers (31) erwärmt wird, umfassend: ein Wärmeausgleichselement (36), das eine zylindrische Form aufweist und mit einer inneren Umfangsoberfläche des Heizzielabschnitts (33) in Kontakt vorliegt, **dadurch gekennzeichnet, dass** die Wärmeleitfähigkeit in einer axialen Richtung des Wärmeausgleichselements (36) höher ist als Wärmeleitfähigkeit mindestens der inneren Umfangsoberfläche des Heizzielabschnitts (33), und dadurch, dass es weiter einen Wärmeisolationsteil (49) umfasst, der einen höheren Wärmewiderstand aufweist als mindestens die innere Umfangsoberfläche des Heizzielabschnitts (33) und an einer inneren Umfangsoberfläche des Wärmeausgleichselements (36) bereitgestellt ist.

13. Heizwalze (30) nach Anspruch 12, wobei der Wärmeisolationsteil (49) nicht magnetisch und nicht leitfähig ist.

14. Heizwalze (30) nach einem der Ansprüche 1 bis 13, weiter umfassend eine Spule (32), die in dem Inneren des Walzenhauptkörpers (31) bereitgestellt ist, wobei der Heizzielabschnitt (33) durch Induktion erwärmt wird, wenn der Spule (32) elektrische Energie zugeführt wird.

15. Heizwalze (30) nach einem der Ansprüche 1 bis 14, wobei das Wärmeausgleichselement (36) eine geringere relative Permeabilität aufweist als der Heizzielabschnitt (33).

16. Heizwalze (30) nach einem der Ansprüche 1 bis 15, wobei der elektrische Widerstand in der Umfangsrichtung des Wärmeausgleichselements (36) höher ist als der elektrische Widerstand des Heizzielabschnitts (33).

17. Vorrichtung zum Ziehen von Spinngarn, einschließlich der Heizwalze (30), nach einem der Ansprüche 1 bis 16, wobei Garne (Y) auf einer äußeren Umfangsoberfläche der Heizwalze (30) gewickelt sind, um in der axialen Richtung ausgerichtet zu sein.

**Revendications**

1. Rouleau chauffant (30) dans lequel une portion cible de chauffage (33) d'un corps principal de rouleau (31) est chauffée, comprenant

   un élément égalisateur de chaleur (36) qui est de forme cylindrique et est en contact avec une surface circonférentielle interne de la portion cible de chauffage (33),
   **caractérisé en ce que** la conductivité thermique dans une direction axiale de l'élément égalisateur de chaleur (36) est supérieure à la conductivité thermique d'au moins la surface circonférentielle interne de la portion cible de chauffage (33), et
   dans l'élément égalisateur de chaleur (36), la conductivité thermique dans une direction radiale est inférieure à la conductivité thermique dans la direction axiale.

2. Rouleau chauffant (30) selon la revendication 1, dans lequel, dans l'élément égalisateur de chaleur (36), la conductivité thermique dans une direction circonférentielle est supérieure à la conductivité thermique dans la direction radiale.

3. Rouleau chauffant (30) selon la revendication 1 ou 2, dans lequel l'élément égalisateur de chaleur (36) est réalisé à partir de matériau composite en fibres dans lequel des matériaux en fibres (41a) sont stratifiés dans la direction radiale avec un matériau de base (41b) présentant une conductivité thermique inférieure à celle des matériaux en fibres (41a) qui est fourni entre les matériaux en fibres (41a).

4. Rouleau chauffant (30) selon la revendication 3, dans lequel le matériau composite en fibres présente une structure telle que des éléments en feuille (41) incluant les matériaux en fibres (41a) et le matériau de base (41b) sont stratifiés dans la direction radiale.

5. Rouleau chauffant (30) selon la revendication 3 ou 4, dans lequel, dans le matériau composite en fibres, les matériaux en fibres (41a) sont orientés principalement dans la direction axiale.

6. Rouleau chauffant (30) selon la revendication 3 ou 4, dans lequel, dans le matériau composite en fibres, les matériaux en fibres (41a) sont orientés aléatoirement de manière tridimensionnelle.

7. Rouleau chauffant (30) selon l'une quelconque des revendications 3 à 6, dans lequel, dans l'élément égalisateur de chaleur (36) réalisé à partir de matériau composite en fibres, le taux de remplissage minimal des matériaux en fibres (41a) dans une section transversale orthogonale à la direction radiale, qui est obtenu au niveau de chaque emplacement dans la direction radiale, est inférieur au taux de remplissage minimal des matériaux en fibres (41a) dans une section transversale orthogonale à la direction axiale, qui est obtenu au niveau de chaque emplacement dans la direction axiale.

8. Rouleau chauffant (30) selon l'une quelconque des revendications 3 à 7, dans lequel, dans l'élément égalisateur de chaleur (36) réalisé à partir de matériau composite en fibres, le taux de remplissage minimal des matériaux en fibres (41a) dans la section transversale orthogonale à la direction radiale, qui est obtenu au niveau de chaque emplacement dans la direction radiale, est inférieur au taux de remplissage minimal des matériaux en fibres (41a) dans une section transversale orthogonale à la direction circonférentielle, qui est obtenu au niveau de chaque emplacement dans la direction circonférentielle.

9. Rouleau chauffant (30) selon l'une quelconque des revendications 3 à 8, dans lequel l'élément égalisateur de chaleur (36) réalisé à partir de matériau composite en fibres est formé pour être de forme cylindrique en alignant une pluralité d'éléments égalisateurs de chaleur (38) dans la direction circonférentielle.

10. Rouleau chauffant (30) selon l'une quelconque des revendications 3 à 9, dans lequel les matériaux en fibres (41a) sont des fibres de carbone.

11. Rouleau chauffant (30) selon l'une quelconque des revendications 1 à 10, dans lequel une partie d'isolation thermique (49) présentant une résistance à la chaleur supérieure à au moins celle de la surface circonférentielle interne de la portion cible de chauffage (33) est fournie sur une surface circonférentielle interne de l'élément égalisateur de chaleur (36).

12. Rouleau chauffant (30) dans lequel une portion cible de chauffage (33) d'un corps principal de rouleau (31) est chauffée, comprenant :

un élément égalisateur de chaleur (36) qui est de forme cylindrique et est en contact avec une surface circonférentielle interne de la portion cible de chauffage (33),
**caractérisé en ce que** la conductivité thermique dans une direction axiale de l'élément égalisateur de chaleur (36) est supérieure à la conductivité thermique d'au moins la surface circonférentielle interne de la portion cible de chauffage (33), et **en ce qu'**il comprend en outre une partie d'isolation thermique (49) qui présente une résistance à la chaleur supérieure à au moins celle de la surface circonférentielle interne de la portion cible de chauffage (33) et est fournie sur une surface circonférentielle interne de l'élément égalisateur de chaleur (36).

13. Rouleau chauffant (30) selon la revendication 12, dans lequel, la partie d'isolation thermique (49) est non magnétique et non conductrice.

14. Rouleau chauffant (30) selon l'une quelconque des revendications 1 à 13, comprenant en outre une bobine (32) qui est fournie à l'intérieur du corps principal de rouleau (31),
la portion cible de chauffage (33) étant chauffée par induction à mesure que de l'énergie électrique alimente la bobine (32).

15. Rouleau chauffant (30) selon l'une quelconque des revendications 1 à 14, dans lequel l'élément égalisateur de chaleur (36) présente une perméabilité relative inférieure à celle de la portion cible de chauffage (33).

16. Rouleau chauffant (30) selon l'une quelconque des revendications 1 à 15, dans lequel la résistivité électrique dans la direction circonférentielle de l'élément égalisateur de chaleur (36) est supérieure à la résistivité électrique de la portion cible de chauffage (33).

17. Dispositif d'étirage de filés incluant le rouleau chauffant (30) selon l'une quelconque des revendications 1 à 16, dans lequel
des fils (Y) sont enroulés sur une surface circonférentielle externe du rouleau chauffant (30) pour être alignés dans la direction axiale.

FIG.1

UPWARD

LEFTWARD ←—⊙—→ RIGHTWARD
FORWARD

DOWNWARD

FIG.2

FIG.3

36

38

AXIAL DIRECTION

FIG.4

(a)

(b)

(c)

FIG.5

CIRCUMFERENTIAL DIRECTION   38  OUTWARD

RADIAL DIRECTION

INWARD

AXIAL DIRECTION

FIG.6

EP 3 758 445 B1

FIG.7

RADIAL DIRECTION

38

41b    41a    41b

41

FILLING
RATE

S2

FILLING RATE

S3

CIRCUMFERENTIAL
DIRECTION

EP 3 758 445 B1

Fig. 8

(a)

(b)

(c)

Fig. 9

UPWARD

LEFTWARD

REARWARD ←⊙→ FORWARD

DOWNWARD

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003100437 A

- DE 19613433 A1